# EUROPEAN PATENT APPLICATION

(11) **EP 4 792 961 A1**
(43) Date of publication of application: **19.08.2026**
(21) Application number: 24877068.7
(22) Date of filing: 02.10.2024
(51) Int. Cl.: B23B 31/20

(54) **MACHINE TOOL**

(30) Priority: 12.10.2023 JP 2023176629
(71) Applicant: Star Micronics Co., Ltd., Shizuoka-shi, Shizuoka 422-8654 (JP)
(72) Inventor: SUGIMOTO, Takashi, Shizuoka-shi, Shizuoka 422-8654 (JP); KAWAMURA, Motohiro, Shizuoka-shi, Shizuoka 422-8654 (JP); ASABA, Yohei, Shizuoka-shi, Shizuoka 422-8654 (JP); SUGIYAMA, Takehiro, Shizuoka-shi, Shizuoka 422-8654 (JP); MIZUGAKI, Hinako, Shizuoka-shi, Shizuoka 422-8654 (JP)
(74) Representative: Grünecker Patent- und Rechtsanwälte PartG mbB
(86) International application number: PCT/JP2024/035194
(87) International publication number: WO 2025/079470

(57) **Abstract**

[Problem] Provided is a machine tool in which a collet chuck can easily be replaced with a collet chuck that conforms to an outer diameter of a workpiece.

[Solution] An NC lathe 1 machines a workpiece W1 gripped by a first spindle 4. The first spindle 4 includes a collet chuck 47 having a chuck main body 471 disposed on a distal end portion of the first spindle 4 and a gripping unit 472 disposed on an inner side of the chuck main body 471 and gripping the workpiece W1, and a spindle cap 48 that restricts movement of the chuck main body 471 toward a distal end side by contacting a distal end surface of the chuck main body 471. A cap through-hole 48a is formed in the spindle cap 48 at a center portion and penetrating in a Z1-axis direction that is an axial direction of the first spindle 4. In a state where the gripping unit 472 is capable of widening and narrowing in a radial direction orthogonal to the Z1-axis direction and is narrowed in the radial direction, a rear-end side portion 472b of the gripping unit 472, located further on a rear end side than the cap through-hole 48a, is smaller than the cap through-hole 48a in the radial direction.

## Description

### [Technical Field]

The present invention relates to a machine tool that machines a workpiece gripped by a spindle.

### [Background Art]

A machine tool that machines a rod-shaped workpiece gripped by a rotatable spindle is known. The spindle includes a collet chuck that grips the workpiece. A tapered surface having a diameter that increases with proximity to a distal end side of the spindle is formed in the outer circumferential surface of the collet chuck. The collet chuck is covered by a chuck sleeve having an inner circumferential surface similar or identical to the outer circumferential surface of the collet chuck. The configuration is such that moving the chuck sleeve toward the distal end presses the tapered surface of the collet chuck against the chuck sleeve, causing a gripping unit formed in a distal end side part of the collet chuck to narrow and grip the workpiece. Although a typical collet chuck is formed as a single overall unit, a collet chuck in which a front bore member and a body member are separate members has also been proposed (see, for example, PTL 1 and the like). The collet chuck exerts a strong gripping force by using a gripping unit having an inner diameter that conforms to the outer diameter of the workpiece to be machined. Accordingly, when machining a workpiece having an outer diameter that is different from workpieces machined up until that point, a replacement operation for replacing the collet chuck with a collet chuck having an inner diameter conforming to the outer diameter of the workpiece is performed in setup work.

### [Citation List]

### [Patent Literature]

[PTL 1] Japanese Patent Application Publication No. 2000-158216

### [Summary of Invention]

### [Technical Problem]

Replacing the collet chuck in a conventional machine tool has required complicated operations. First, a rod for stopping rotation is inserted into a rear-end side portion of the spindle such that the spindle does not rotate. Then, a spindle cap that restricts movement of the collet chuck toward the distal end side is removed from the spindle main body using a hooking spanner, after which the collet chuck is removed from the chuck sleeve. Next, a collet chuck having an inner diameter that conforms to the outer diameter of the workpiece to be machined is inserted into the chuck sleeve, the spindle cap is attached to the spindle main body, and the rod for stopping rotation is finally pulled out.

Having been conceived in light of the foregoing issue, an object of the present invention is to provide a machine tool in which a collet chuck can easily be replaced with a collet chuck that conforms to an outer diameter of a workpiece.

### [Solution to Problem]

To address the above-described issue, a machine tool according to the present invention is a machine tool that machines a workpiece gripped on a spindle,
the spindle includes a collet chuck having a chuck main body disposed on a distal end portion of the spindle and a gripping unit that grips the workpiece, and a spindle cap that restricts movement of the chuck main body toward a distal end side by contacting a distal end surface of the chuck main body,
a cap through-hole is formed in the spindle cap at a center portion and penetrating in an axial direction of the spindle, and
in a state where the gripping unit is capable of widening and narrowing in a radial direction orthogonal to the axial direction and is narrowed in the radial direction, a rear-end side portion of the gripping unit, located further on a rear end side than the cap through-hole, is smaller than the cap through-hole in the radial direction.

According to this machine tool, narrowing the diameter of the gripping unit allows the rear-end side portion to pass through the cap through-hole, and the gripping unit can therefore be removed without removing the spindle cap. This makes it easy to replace the collet chuck with a collet chuck that conforms to the outer diameter of the workpiece.

Here, the spindle may have a chuck sleeve that contacts an outer circumferential surface of the chuck main body and causes the chuck main body to widen and narrow in the radial direction. A tapered outer peripheral surface having a diameter that increases with proximity to the distal end side may be formed in the chuck main body. In addition, the tapered outer peripheral surface may be pushed by the chuck sleeve moving toward the distal end side to narrow the chuck main body in the radial direction. Furthermore, the gripping unit may be narrowed in the radial direction by narrowing the chuck main body in the radial direction. In addition, the chuck main body may have an inner circumferential surface that contacts the outer circumferential surface of the gripping unit, and the gripping unit may be narrowed in the radial direction by narrowing the chuck main body in the radial direction. In addition, the gripping unit may have at least a part of the rear-end side portion disposed inside of the distal end side portion of the chuck main body. In addition, the gripping unit may be capable of narrowing independently of the chuck main body, and the gripping unit may be capable of narrowing by being manipulated from the distal end side of the spindle. Furthermore, in a state where the gripping unit is narrowed in the radial direction, the size of the rear-end side portion projected in the axial direction may be less than or equal to the size of the cap through-hole projected in the axial direction.

In this machine tool,
an engaging portion may be formed in an outer circumferential surface of the gripping unit, and
the chuck main body may include an engaged portion that restricts movement of the gripping unit in the axial direction by engaging with the engaging portion in a state where the gripping unit is widened in the radial direction.

Movement of the gripping unit in the axial direction is restricted when the gripping unit is widened in the radial direction, which prevents the gripping unit from unintentionally moving in the axial direction.

Here, the engaging portion has a protruding shape protruding outward in the radial direction, and the engaged portion may have a concave shape recessed outward in the radial direction. Conversely, the engaging portion may have a concave shape recessed inward in the radial direction, and the engaged portion may have a protruding shape protruding inward in the radial direction. In a state where the gripping unit is capable of narrowing in the radial direction independently of the chuck main body and is narrowed in the radial direction independently of the chuck main body, the engagement between the engaging portion and the engaged portion may be released such that the gripping unit moves freely toward the distal end side. In addition, in a state where the gripping unit is narrowed in the radial direction with the chuck main body by being pressed by the chuck main body, movement of the gripping unit in the axial direction may be restricted while maintaining the engagement between the engaging portion and the engaged portion. Movement toward the rear end side may be restricted by the chuck main body being pressed against the spindle cap by a spring.

In this machine tool,
the gripping unit may include an exposed portion exposed to a distal end of the spindle, and the exposed portion may have an exposed recess recessed in the axial direction.

Using the exposed recess makes it possible to narrow the gripping unit with ease. Here, a plurality of the exposed recesses may be provided at intervals in the circumferential direction.

In this machine tool,
the gripping unit may have a protruding portion protruding further toward the distal end side than the cap through-hole.

According to this aspect, using the protruding portion makes it possible to narrow the gripping unit with ease.

In this machine tool,
the gripping unit may include a plurality of dividers arranged in an annular form with gaps therebetween in a circumferential direction, and elastic members disposed between corresponding ones of the dividers and pressing the dividers outward in the radial direction.

Doing so makes it possible to press the gripping unit outward in the radial direction with a simple configuration.

To address the above-described issue, a machine tool according to the present invention is a machine tool that machines a workpiece gripped on a spindle,
the spindle includes a collet chuck having a chuck main body disposed on a distal end portion of the spindle and a gripping unit that grips the workpiece, and a spindle cap that restricts movement of the chuck main body toward a distal end side by contacting a distal end surface of the chuck main body,
a cap through-hole is formed in the spindle cap at a center portion and penetrating in an axial direction of the spindle, and
in a state where the gripping unit is capable of widening and narrowing in a radial direction orthogonal to the axial direction and is narrowed in the radial direction, a rear-end side portion of the gripping unit, located further on a rear end side than the cap through-hole, is capable of passing through the cap through-hole.

According to this machine tool, by narrowing the diameter of the gripping unit, the gripping unit can be removed without removing the spindle cap, making it easy to replace the collet chuck with a collet chuck that conforms to the outer diameter of the workpiece.

### [Advantageous Effects of Invention]

According to the present invention, a machine tool in which a collet chuck can easily be replaced with a collet chuck that conforms to an outer diameter of a workpiece can be provided.

### [Brief Description of Drawings]

[Fig. 1] Fig. 1 is a front view illustrating the external appearance of a NC lathe according to an embodiment.
[Fig. 2] Fig. 2 is a simplified plan view of the internal configuration of the NC lathe illustrated in Fig. 1.
[Fig. 3] Fig. 3 is a cross-sectional view of a first spindle illustrated in Fig. 2 from the front, with the first spindle cut along a vertical plane passing through the first spindle axis thereof.
[Fig. 4] Fig. 4 is a perspective view of the first spindle illustrated in Fig. 2.
[Fig. 5] Fig. 5 is an enlarged view of a part A in Fig. 3.
[Fig. 6] Fig. 6 is a perspective view of a gripping unit of the first spindle illustrated in Fig. 5.
[Fig. 7] Fig. 7 is a right side view of the first spindle illustrated in Figs. 3 and 4.
[Fig. 8] Fig. 8 is an enlarged view, similar to Fig. 5, illustrating a state in which the gripping unit is removed.
[Fig. 9] Fig. 9 is an enlarged view, similar to Fig. 5, illustrating a variation on the gripping unit.

### [Description of Embodiments]

An embodiment of the present invention will be described below with reference to the drawings. The present embodiment will be described using an example where the present invention is applied in a Swiss-type Numerical Control (NC) lathe.

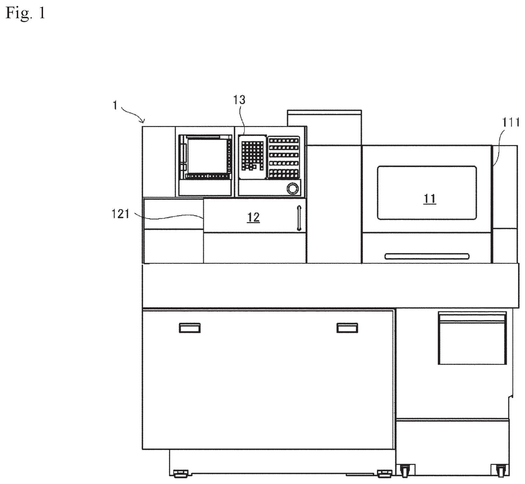

Fig. 1 is a front view illustrating the external appearance of an NC lathe 1 according to the present embodiment.

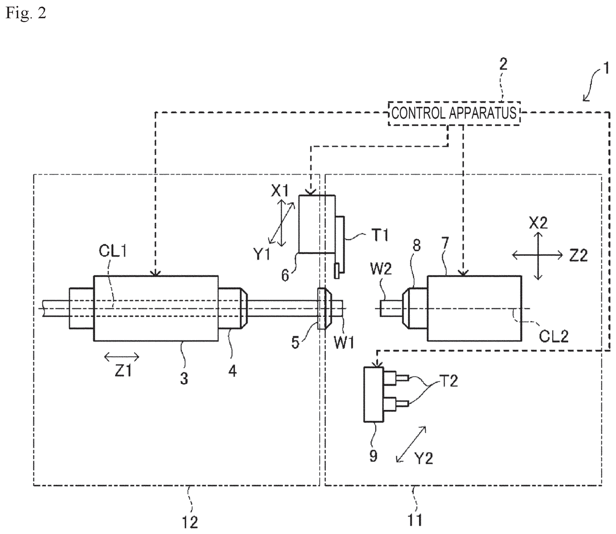

As illustrated in Fig. 1, the NC lathe 1 includes a cutting chamber 11, a first headstock chamber 12, and an operating unit 13, on legs that serve as the base. This NC lathe 1 corresponds to an example of a machine tool. The cutting chamber 11 is disposed on the right side of the NC lathe 1 when viewed from the front. A cutting chamber door 111 is provided in the cutting chamber 11. Opening the cutting chamber door 111 makes it possible to replace components of structures such as a second spindle 8 (see Fig. 2) within the cutting chamber 11. The first headstock chamber 12 is disposed on the left side of the NC lathe 1 when viewed from the front. A spindle chamber door 121 is provided in the first headstock chamber 12. Opening the spindle chamber door 121 makes it possible to replace components of structures such as a first spindle 4 (see Fig. 2) within the first headstock chamber 12. The operating unit 13 is disposed above the first headstock chamber 12. The operating unit 13 is an input apparatus for operating the NC lathe 1. A display apparatus displaying information about the NC lathe 1, various programs stored in the NC lathe 1, and the like is also provided in the operating unit 13. An operator of the NC lathe 1 operates the NC lathe 1 using the operating unit 13.

Fig. 2 is a simplified plan view of the internal configuration of the NC lathe 1 illustrated in Fig. 1.

As illustrated in Fig. 2, a control apparatus 2, a first headstock 3, the first spindle 4, a guide bush 5, a first tool post 6, a second headstock 7, the second spindle 8, and a second tool post 9 are provided in the NC lathe 1. An NC program is stored in the control apparatus 2. The control apparatus 2 is a computer that uses numerical control to operate the first headstock 3, the first spindle 4, the first tool post 6, the second headstock 7, the second spindle 8, and the second tool post 9 in accordance with the NC program. A rotary tool in which a first spindle tool T1 itself rotates may be attached to the first tool post 6. Likewise, a rotary tool in which a second spindle tool T2 itself rotates may be attached to the second tool post 9. The control apparatus 2 controls the rotation of the rotary tools as well. In addition to operations using the NC program, the NC lathe 1 can be operated by directly inputting commands to the control apparatus 2 from the operating unit 13 illustrated in Fig. 1.

The first headstock 3 is disposed within the first headstock chamber 12. Fig. 2 illustrates the first headstock chamber 12 as a rectangular double dot-dash line. The first spindle 4 is mounted on the first headstock 3. The first spindle 4 corresponds to an example of a spindle. The first headstock 3 moves in a Z1-axis direction along with the first spindle 4 in response to signals from the control apparatus 2. The Z1-axis direction is a horizontal direction, and is the left-right direction in Fig. 2. The Z1-axis direction corresponds to an example of an axial direction of the first spindle 4. The first spindle 4 grips a long rod-shaped workpiece W1 inserted therein in a releasable manner. The first spindle 4 can rotate about a first spindle axis CL1 while gripping the workpiece W1. The direction of the first spindle axis CL1 matches the Z1-axis direction. Accordingly, the direction of the first spindle axis CL1 also corresponds to an example of an axial direction of the first spindle 4. A spindle motor (not shown) such as a built-in motor is provided in the first headstock 3. When the spindle motor rotates in response to signals from the control apparatus 2, the first spindle 4 rotates about the first spindle axis CL1. As a result, the workpiece W1 gripped by the first spindle 4 rotates about the first spindle axis CL1. The configuration of the first spindle 4 will be described in detail later.

The guide bush 5 is fixed to a leg of the NC lathe 1. An end surface of the guide bush 5 on the side opposite from the side on which the first spindle 4 is disposed is exposed to the interior of the cutting chamber 11. Fig. 2 illustrates the cutting chamber 11 as a rectangular double dot-dash line. The guide bush 5 supports a distal end portion of the workpiece W1 passing through the interior of the first spindle 4 to be capable of sliding in the Z1-axis direction. The portion of this guide bush 5 that supports the workpiece W1 can rotate about the first spindle axis CL1 in synchronization with the first spindle 4. In other words, the first spindle axis CL1 is also the rotation center axis of the part of the workpiece W1 that is supported by the guide bush 5. Providing the guide bush 5 suppresses warping of the workpiece W1 during machining, which makes it possible to accurately machine the long and thin workpiece W1 in particular.

The first tool post 6 is capable of moving in an X1-axis direction perpendicular to the Z1-axis direction and oriented in the horizontal direction, and in a Y1-axis direction oriented in the vertical direction. The first tool post 6 moves in the X1-axis direction and the Y1-axis direction in response to signals from the control apparatus 2. In Fig. 2, the up-down direction is the X1-axis direction, and a direction perpendicular to the paper surface is the Y1-axis direction. The first spindle tool T1 for machining the workpiece W1 is attached to the first tool post 6. Fig. 2 illustrates the first spindle tool T1 attached to the first tool post 6. The first spindle tool T1 is attached to the first tool post 6 in the cutting chamber 11. A plurality of types of the first spindle tools T1, including a cutting tool for outer diameter machining, a cutting tool for cut-off machining, and the like are attached to the first tool post 6 side-by-side in the Y1-axis direction. When the first tool post 6 moves in the Y1-axis direction, a desired first spindle tool T1 is selected from the plurality of types of first spindle tools T1. Furthermore, when the first tool post 6 moves in the X1-axis direction, the selected first spindle tool T1 cuts into the workpiece W1 gripped by the first spindle 4 to machine the workpiece W1.

The second headstock 7 is disposed within the cutting chamber 11. The second spindle 8 is mounted on the second headstock 7. The second headstock 7 moves in an X2-axis direction and a Z2-axis direction along with the second spindle 8 in response to signals from the control apparatus 2. The X2-axis direction is the same direction as the X1-axis direction described above, and the Z2-axis direction is the same direction as the Z1-axis direction described above. The Z2-axis direction corresponds to an example of an axial direction of the second spindle 8. A cut-off workpiece W2 that has been machined using the first spindle 4 and cut by the cutting tool for cut-off machining is passed to the second spindle 8. The second spindle 8 grips the cut-off workpiece W2 passed from the first spindle 4 in a releasable manner. The second spindle 8 can rotate about a second spindle axis CL2 while gripping the cut-off workpiece W2. The direction of the second spindle axis CL2 matches the Z2-axis direction. Accordingly, the direction of the second spindle axis CL2 also corresponds to an example of an axial direction of the second spindle 8. A spindle motor (not shown) such as a built-in motor is provided in the second headstock 7. When the spindle motor rotates in response to signals from the control apparatus 2, the second spindle 8 rotates about the second spindle axis CL2. As a result, the cut-off workpiece W2 gripped by the second spindle 8 rotates about the second spindle axis CL2.

The second tool post 9 is disposed within the cutting chamber 11 at a position distanced from the first spindle axis CL1 in the X2-axis direction. The second tool post 9 moves in a Y2-axis direction in response to signals from the control apparatus 2. The Y2-axis direction is the same direction as the Y1-axis direction, described above. A plurality of second spindle tools T2 that machine the cut-off workpiece W2 gripped by the second spindle 8 are attached to the second tool post 9. Fig. 2 illustrates the second spindle tool T2 attached to the second tool post 9. The plurality of types of second spindle tools T2, such as a drill and an endmill, are attached to the second tool post 9. Although not illustrated in Fig. 2, the second spindle tools T2 are attached side-by-side not only in the X2-axis direction but also in the Y2-axis direction. When the second headstock 7 moves in the X2-axis direction and the second tool post 9 moves in the Y2-axis direction, a desired second spindle tool T2 is selected from the plurality of types of second spindle tools T2. Furthermore, when the second headstock 7 moves in the Z2-axis direction, a cut end side portion of the cut-off workpiece W2 gripped by the second spindle 8 is machined.

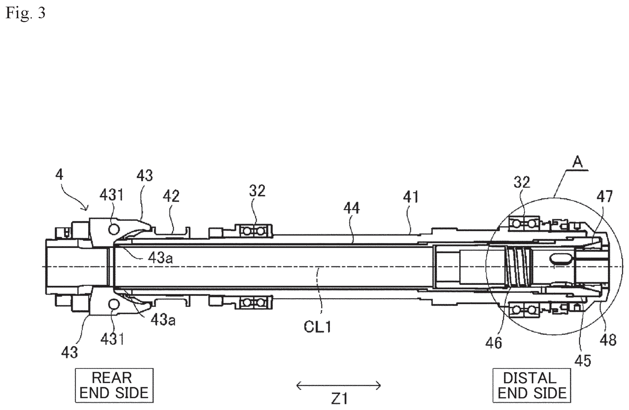

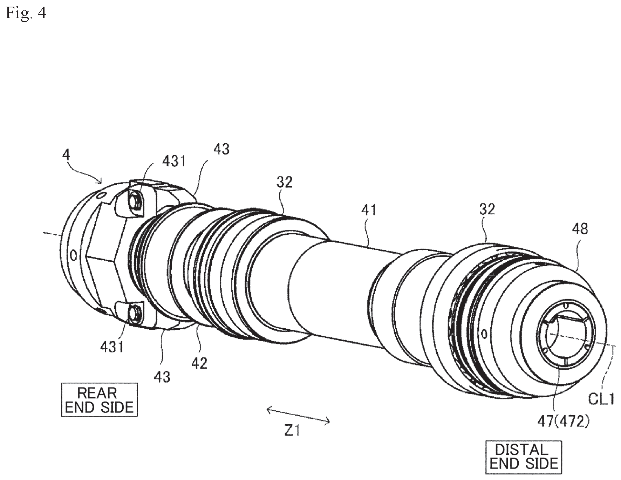

Fig. 3 is a cross-sectional view of the first spindle 4 illustrated in Fig. 2 from the front, with the first spindle cut along a vertical plane passing through the first spindle axis CL1. Note that in Fig. 3, hatching indicating the cross-section has not been added. Fig. 4 is a perspective view of the first spindle 4 illustrated in Fig. 2.

As illustrated in Figs. 3 and 4, the first spindle 4 has a generally cylindrical shape having an axis in the direction of the first spindle axis CL1. The first spindle 4 is rotatably supported in the first headstock 3 (see Fig. 2) by a bearing 32. The first spindle 4 includes a spindle main body 41, a shifter 42, claw members 43, a push sleeve 44, a chuck sleeve 45, a coil spring 46, a collet chuck 47, and a spindle cap 48. A collet opening/closing mechanism is formed by the shifter 42, the claw members 43, the push sleeve 44, the chuck sleeve 45, the coil spring 46, and the collet chuck 47.

The spindle main body 41 is a cylinder that serves as a base for the first spindle 4. The shifter 42 is disposed on the outer side of the rear end side of the spindle main body 41, and is attached to the spindle main body 41 so as to be capable of sliding in the Z1-axis direction. The shifter 42 is slid in the Z1-axis direction by the collet opening/closing actuator (not shown), the operation of which is controlled by the control apparatus 2 (see Fig. 2). Figs. 3 and 4 illustrate a state in which the shifter 42 is located furthest on the rear end side. Two of the claw members 43 are attached to the spindle main body 41 so as to be capable of swinging about claw shafts 431. Each of the claw members 43 has a distal end portion that is in contact with the outer surface of the shifter 42, and swings in response to sliding movement of the shifter 42. A sleeve push portion 43a of each of the claw members 43 is in contact with a rear end of the push sleeve 44.

The push sleeve 44 is a cylinder disposed on an inner side of the spindle main body 41, and a distal end thereof is in contact with a rear end of the chuck sleeve 45. Sliding movement of the shifter 42 causes the claw members 43 to swing, which causes the push sleeve 44 to move in the Z1-axis direction. In particular, when the shifter 42 is slid to the distal end side, the claw member 43 on the upper side in Fig. 3 swings clockwise, the claw member 43 on the lower side in Fig. 3 swings counterclockwise, and the push sleeve 44 moves to the rear end side. Conversely, when the shifter 42 is slid to the rear end side, the claw member 43 on the upper side in Fig. 3 swings counterclockwise, the claw member 43 on the lower side in Fig. 3 swings clockwise, and the push sleeve 44 moves to the distal end side. Fig. 3 illustrates a state in which the push sleeve 44 is located furthest on the distal end side.

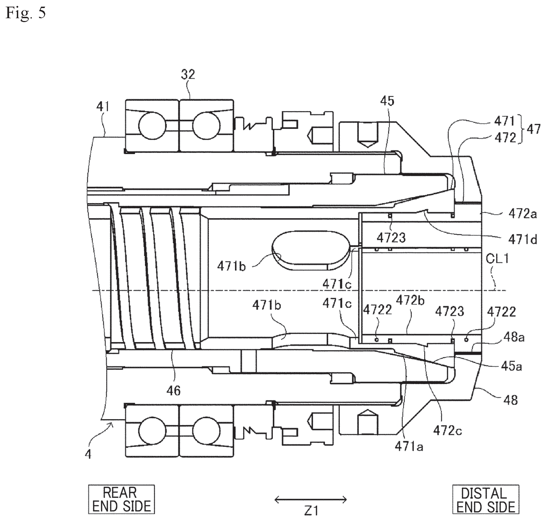

The coil spring 46 constantly pushes the chuck sleeve 45 to the rear end side and a chuck main body 471 of the collet chuck 47 (see Fig. 5) to the distal end side. Accordingly, the push sleeve 44 whose distal end is in contact with the chuck sleeve 45 is also pushed toward the rear end side, and the rear end of the push sleeve 44 pushes the sleeve push portion 43a toward the rear end side. In addition, the chuck main body 471 is restricted from moving to the rear end side while the distal end is in contact with a rear end of the spindle cap 48 by being pushed by the coil spring 46. This coil spring 46 corresponds to an example of a spring. The collet chuck 47 and the spindle cap 48 are disposed in a distal end portion of the first spindle 4. The chuck sleeve 45, the collet chuck 47, and the spindle cap 48 will be described in detail later.

Fig. 5 is an enlarged view of a part A in Fig. 3.

As illustrated in Fig. 5, a distal end portion inner circumferential surface 45a of the chuck sleeve 45 is a tapered surface having a diameter that becomes larger with proximity to the distal end side. The collet chuck 47 includes the chuck main body 471 and a gripping unit 472, which is a portion that grips a workpiece (see Fig. 2). The chuck main body 471 and the gripping unit 472 are configured as separate entities, and each is configured to be capable of widening and narrowing in diameter in a radial direction orthogonal to the axial direction of the first spindle 4. A distal end portion outer circumferential surface 471a of the chuck main body 471 is a tapered surface having a diameter that increases with proximity to the distal end side. Three each of an oval-shaped long hole 471b located slightly toward the rear end side from the center in the Z1-axis direction, and a slot 471c continuous from the distal end surface of the chuck main body 471 to the long hole 471b, are formed in the chuck main body 471, spaced by 120° in the circumferential direction. These long holes 471b and slots 471c enable the diameter of the chuck main body 471, and particularly the distal end side, to widen and narrow in the radial direction.

The chuck sleeve 45 also moves to the distal end side when the push sleeve 44 (see Fig. 3) is moved to the distal end side by driving the collet opening/closing actuator (not shown). The tapered surface of the distal end portion inner circumferential surface 45a of the chuck sleeve 45 and the tapered surface of the distal end portion outer circumferential surface 471a of the chuck main body 471 resist the elasticity of the chuck main body 471 itself, and the distal end side of the chuck main body 471 narrows in the radial direction. When the chuck main body 471 narrows, the gripping unit 472 also narrows by being pushed by the chuck main body 471. As a result, the workpiece W1 (see Fig. 2) is gripped on the first spindle 4.

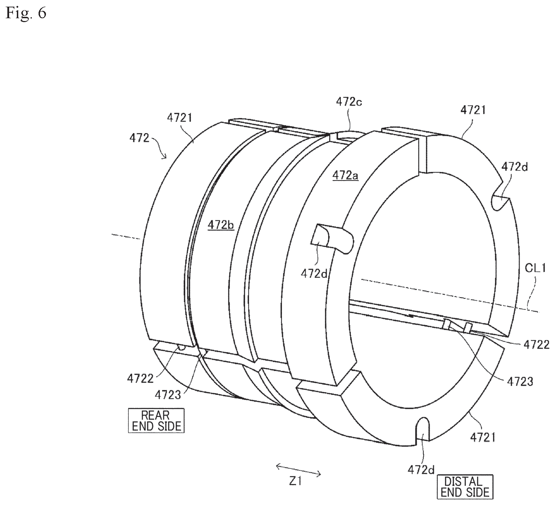

Conversely, when the push sleeve 44 moves to the rear end side, the chuck sleeve 45 also moves to the rear end side by being pressed by the coil spring 46. The force with which the distal end portion inner circumferential surface 45a of the chuck sleeve 45 pushes the distal end portion outer circumferential surface 471a of the chuck main body 471 inward in the radial direction decreases or disappears, and the distal end side of the chuck main body 471 therefore widens in the radial direction due to the elasticity of the chuck main body 471 itself. When the chuck main body 471 widens, the gripping unit 472 also widens due to the elasticity of diameter widening springs 4722 (see Fig. 6), which will be described later. As a result, the workpiece W1 (see Fig. 2) is released from the first spindle 4.

An engaged portion 471d recessed outward in the radial direction orthogonal to the Z1-axis direction is formed in the inner circumferential surface of the distal end portion of the chuck main body 471. The engaged portion 471d is constituted by a distal end surface having a planar direction that coincides with the radial direction, and an inclined surface inclined such that the recess becomes smaller with progress from the distal end surface to the rear end side. In other words, the engaged portion 471d is formed as an annular recess having a right-angle triangular cross-section. However, the engaged portion 471d may be a recess having another cross-sectional shape, such as a rectangular shape.

The spindle cap 48 is a bowl-shaped member including a circular cap through-hole 48a formed at a center portion and penetrating in the Z1-axis direction. When the distal end surface of the chuck main body 471 comes into contact with a portion corresponding to a bottom part of this bowl shape, the spindle cap 48 regulates movement of the chuck main body 471 toward the distal end side. The chuck main body 471 is constantly pressed against the spindle cap 48 by being pushed by the coil spring 46. The spindle cap 48 is fixed to the spindle main body 41 when a female screw part formed on an inner side of an edge part of this bowl shape is threaded onto a male screw part formed in a distal end portion of the spindle main body 41. This spindle cap 48 can be removed from the spindle main body 41 by inserting a rod for stopping rotation into the rear-end side portion of the first spindle 4 so that the spindle main body 41 does not rotate, and then rotating the spindle cap 48 relative to the spindle main body 41 using a hooking spanner. Removing the spindle cap 48 makes it possible to remove the chuck main body 471 from the chuck sleeve 45.

In the gripping unit 472, a flange portion 472a is formed in the distal end portion and disposed within the cap through-hole 48a of the spindle cap 48, and a rear-end side portion 472b located further toward the rear end side than the cap through-hole 48a is disposed on an inner side of the distal end portion of the chuck main body 471. The distal end surface of the flange portion 472a of the gripping unit 472 is exposed to the distal end of the first spindle 4. This flange portion 472a corresponds to an example of an exposed portion of the gripping unit 472.

An engaging portion 472c protruding outward in the radial direction is formed in the outer circumferential surface of the rear-end side portion 472b of the gripping unit 472. The engaging portion 472c restricts movement of the gripping unit 472 in the Z1-axis direction by engaging with the engaged portion 471d of the chuck main body 471 at least when the gripping unit 472 is widened in the radial direction. In addition, when the gripping unit 472 narrows with the chuck main body 471, the engagement between the engaging portion 472c and the engaged portion 471d is maintained, and movement of the gripping unit 472 in the Z1-axis direction is restricted. Note that movement of the gripping unit 472 toward the rear end side of the chuck main body 471 may be restricted through contact between portions different from the engaging portion 472c and the engaged portion 471d, such as the rear end surface of the flange portion 472a and the distal end surface of the chuck main body 471. In that case, movement toward the distal end side may be restricted by the engagement between the engaging portion 472c and the engaged portion 471d. On the other hand, when the gripping unit 472 narrows while the chuck main body 471 is widened, the engagement between the engaging portion 472c and the engaged portion 471d is released, enabling the gripping unit 472 to move toward the distal end side. The engaging portion 472c is constituted by a distal end surface having a planar direction that coincides with the radial direction, and an inclined surface inclined such that the projection becomes smaller with progress from the distal end surface to the rear end side. In other words, the engaging portion 472c is formed as a right-angle triangular annular protrusion having a cross-sectional shape that conforms to the concave shape of the engaged portion 471d. However, the engaging portion 472c may be a protrusion having another shape as long as the movement of the gripping unit 472 toward at least the distal end side can be restricted when the engaged portion 471d is engaged.

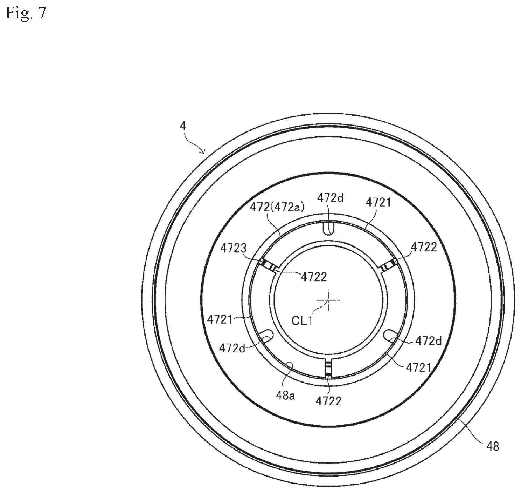

Fig. 6 is a perspective view of the gripping unit 472 of the first spindle 4 illustrated in Fig. 5. Fig. 7 is a right side view of the first spindle illustrated in Figs. 3 and 4.

As illustrated in Figs. 6 and 7, the gripping unit 472 is constituted by three dividers 4721, the diameter widening springs 4722, and two ring-shaped wires 4723 (see Fig. 5). The three dividers 4721 are arranged in what is an annular shape when viewed in the Z1-axis direction, so as to have an overall cylindrical shape with flanges, with small gaps provided in the circumferential direction. Note that as long as the dividers 4721 are substantially cylindrical when arranged in the circumferential direction, the number thereof may be two or four or more.

The diameter widening springs 4722 are compression springs arranged in groups of two, for a total of six, between corresponding ones of the three dividers 4721, and press the three dividers 4721 outward in the radial direction. The diameter widening springs 4722 correspond to an example of an elastic member. Holes with a bottom that is recessed in substantially the circumferential direction, into which the diameter widening springs 4722 enter, are formed in the opposing surfaces of each of the dividers 4721. The diameter widening springs 4722 are held between the different dividers 4721 by both ends thereof entering the stated holes formed in different ones of the dividers 4721. As illustrated in Fig. 5, the outer circumferential surface of the rear-end side portion 472b of each of the dividers 4721 contacts the inner circumferential surface of the chuck main body 471 due to the dividers 4721 being pushed outward in the radial direction by the diameter widening springs 4722, and the engaging portion 472c enters the engaged portion 471d to maintain the engagement between the engaging portion 472c and the engaged portion 471d.

The two ring-shaped wires 4723 are disposed in grooves formed extending circumferentially in the outer circumferential surface of each of the three dividers 4721. The movement of the dividers 4721 outward in the radial direction is regulated by the wires 4723 up to a predetermined position. Fig. 6 illustrates a state in which the dividers 4721 are located furthest outward in the radial direction.

A total of three exposed recess portions 472d recessed in the Z1-axis direction are formed in the flange portion 472a of the gripping unit 472, spaced by 120° in the circumferential direction. The exposed recess portions 472d are recesses with which the tool engages when the gripping unit 472 narrows, and openings thereof are exposed to the distal end surface of the first spindle 4. By inserting the tool into the three exposed recess portions 472d from the distal end side of the first spindle 4 and bringing the three dividers 4721 together in the radial direction, the gaps between the dividers 4721 in the circumferential direction narrow against the pressure from the diameter widening springs 4722, and the gripping unit 472 narrows.

An operation for replacing a workpiece W1 having an outer diameter different from the workpiece W1 machined up until that point in the gripping unit 472 conforming to the outer diameter of the workpiece W1 to be machined next when machining the workpiece W1 using the NC lathe 1 will be described next.

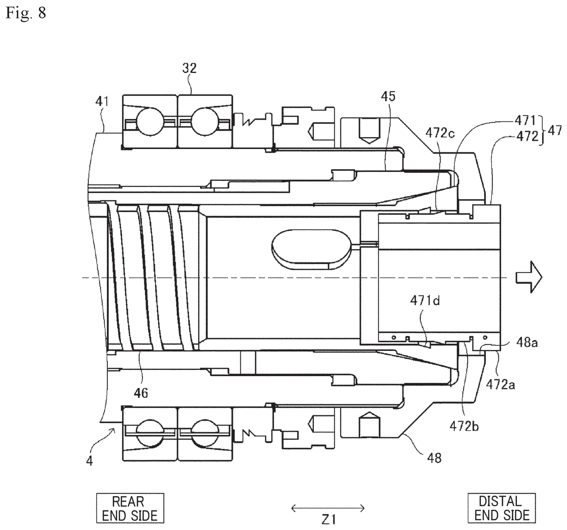

Fig. 8 is an enlarged view, similar to Fig. 5, illustrating a state in which the gripping unit 472 is removed.

When removing the gripping unit 472, the gripping unit 472 is first narrowed in diameter using the tool described above. As illustrated in Fig. 8, in a state where the gripping unit 472 is narrowed, the overall gripping unit 472 is smaller in the radial direction than the cap through-hole 48a. Note that if the gripping unit 472 is smaller in the radial direction than the cap through-hole 48a in a state where all of the rear-end side portions 472b located further on the rear end side than the cap through-hole 48a are narrowed, the gripping unit 472 can be withdrawn through the cap through-hole 48a to the distal end side, and thus the entire gripping unit 472 need not be smaller than the cap through-hole 48a. However, if, as in the present embodiment, the entire gripping unit 472 is located further toward the rear end side than the distal end of the cap through-hole 48a, it is necessary for the entire gripping unit 472 to be smaller in the radial direction than the cap through-hole 48a, at least in the narrowed state. In addition, because the gripping unit 472 is narrowed independently of the chuck main body 471, the engagement between the engaging portion 472c and the engaged portion 471d can be released. The gripping unit 472 can then be removed by pulling the gripping unit 472 toward the distal end side, as indicated by the white arrow in Fig. 8, while the engagement is released. In other words, by narrowing the gripping unit 472 to release the engagement between the engaging portion 472c and the engaged portion 471d and pass the rear-end side portion 472b of the gripping unit 472 through the cap through-hole 48a, the gripping unit 472 only can be removed from the chuck main body 471, without removing the spindle cap 48.

In addition, the gripping unit 472 can be attached through the opposite procedure from that used during the removal, even without removing the spindle cap 48. As described above, the engaging portion 472c of the gripping unit 472 has an inclined surface inclined such that the projection becomes smaller with progress from the distal end surface to the rear end side. Due to this inclined surface, after the rear end of the gripping unit 472 enters the inside of the chuck main body 471, the gripping unit 472 can be attached to the chuck main body 471 simply by pushing the gripping unit 472 to the rear end side. In other words, when the gripping unit 472 is pushed to the rear end side in the chuck main body 471, after the inclined surface reaches the distal end of the chuck main body 471, the gripping unit 472 is pushed inward in the radial direction due to the contact between the distal end of the chuck main body 471 and the inclined surface, which causes the gripping unit 472 to narrow along the inclined surface. Then, after the protruding end of the engaging portion 472c reaches the distal end of the chuck main body 471, the protruding end of the engaging portion 472c contacts the inner circumferential surface of the chuck main body 471, which enables the gripping unit 472 to slide along the inner circumferential surface of the chuck main body 471 while maintaining the narrowed state. Then, when the protruding end of the engaging portion 472c reaches the engaged portion 471d, the gripping unit 472 widens, the engaging portion 472c enters the engaged portion 471d, and the attachment of the gripping unit 472 is completed.

According to the NC lathe 1 of the present embodiment described above, in a state where the gripping unit 472 is narrowed, the rear-end side portion 472b of the gripping unit 472 is smaller in the radial direction than the cap through-hole 48a, and thus the gripping unit 472 can be withdrawn from the chuck main body 471 by narrowing the gripping unit 472 and passing the rear-end side portion 472b of the gripping unit 472 through the cap through-hole 48a. As a result, the gripping unit 472 can be removed from the chuck main body 471 and replaced without removing the spindle cap 48, with the chuck main body 471 remaining as-is, making it easy to replace the collet chuck 47 in accordance with the outer diameter of the workpiece W1. In addition, as long as the gripping unit 472 is not narrowed independently of the chuck main body 471, the engaging portion 472c of the gripping unit 472 and the engaged portion 471d of the chuck main body 471 are engaged. As such, movement of the gripping unit 472 toward the distal end side of the gripping unit 472 is restricted at least in a state where the gripping unit 472 is widened, which prevents the gripping unit 472 from unintentionally moving in the Z1-axis direction. In addition, the flange portion 472a of the gripping unit 472 has the exposed recess portions 472d recessed in the Z1-axis direction, and thus the gripping unit 472 can easily be narrowed independently of the chuck main body 471. In addition, the gripping unit 472 includes the diameter widening springs 4722 that press respective ones of the plurality of dividers 4721 arranged in an annular manner outward in the radial direction, and thus the outer circumferential surface of the gripping unit 472 can be pressed against the inner circumferential surface of the chuck main body 471 by pressing the dividers 4721 outward in the radial direction using a simple configuration.

Although the collet chuck 47 of the present embodiment has been described on the basis of the configuration of the first spindle 4, a collet chuck having the same configuration as that in the first spindle 4 is also provided in the second spindle 8. Accordingly, although not described here, the collet chuck can easily be replaced with a collet chuck that conforms to the outer diameter of the cut-off workpiece W2 in the second spindle 8 too, in the same manner as in the first spindle 4.

A variation on the gripping unit 472 will be described next. In the following descriptions, constituent elements having names identical to those of the constituent elements described thus far are assigned the same reference signs as those used thus far, and redundant descriptions thereof may be omitted.

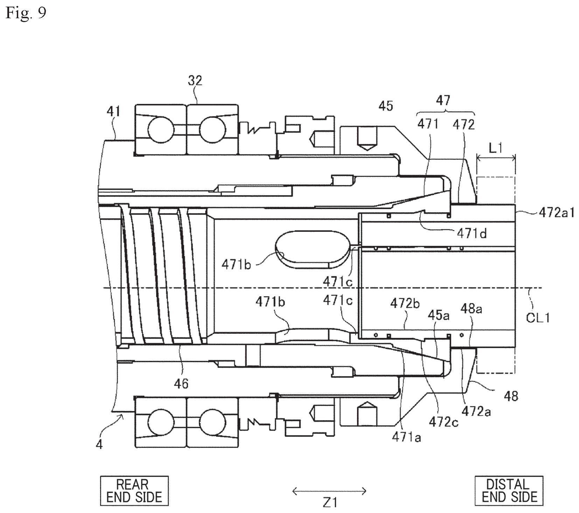

Fig. 9 is an enlarged view, similar to Fig. 5, illustrating a variation on the gripping unit 472. Note that aside from the gripping unit 472, the NC lathe 1 having the gripping unit 472 according to this variation has the same configuration as in the previous embodiment.

As illustrated in Fig. 9, the gripping unit 472 according to the variation differs from the gripping unit 472 of the foregoing embodiment in that no exposed recess portions 472d are provided, and instead, the flange portion 472a has a protruding portion 472a1 protruding by a protrusion length L1 further on the distal end side than the cap through-hole 48a. The protruding portion 472a1 may have a larger diameter than the cap through-hole 48a, as indicated by the double dot-dash line in Fig. 9. The protruding portion 472a1 may also be constituted by a plurality of protruding shapes or protruding members protruding toward the distal end side from the flange portion 472a according to the foregoing embodiment. The gripping unit 472 may also have both the protruding portion 472a1 and the exposed recess portions 472d formed in the flange portion 472a according to the foregoing embodiment.

With the NC lathe 1 according to this variation too, similar effects to those of the foregoing embodiment are achieved. In addition, although the overall length of the first spindle 4 in the Z1-axis direction is increased, the gripping unit 472 can be narrowed by grasping the protruding portion 472a1 by hand or with a tool from the outside in the radial direction, which makes it easier to replace the collet chuck 47 in accordance with the outer diameter of the workpiece W1.

The present invention is not limited to the embodiments described above, and may be modified in a variety of ways within the scope set forth in the claims. For example, the present embodiment has described an example in which the present invention is applied to what is known as a Swiss-type NC lathe 1 including the guide bush 5, but the present invention may be applied to other machine tools such as lathes and machining centers that do not include the guide bush 5. In addition, the second headstock 7 and the second tool post 9 may be omitted. In addition, the foregoing described an example of using the collet chuck 47, which includes the chuck main body 471, in which the engaged portion 471d recessed outward in the radial direction is formed, and the gripping unit 472, in which the engaging portion 472c protruding outward in the radial direction is formed. However, a collet chuck 47 with the protrusion/recessing reversed may be used, including the chuck main body 471 in which the engaged portion 471d protruding inward in the radial direction is formed and the gripping unit 472 in which the engaging portion 472c recessed inward in the radial direction is formed. In addition, instead of the engaged portion 471d and the engaging portion 472c, the configuration may be such that at least one of the frictional force between the chuck main body 471 and the gripping unit 472 and the compressive force of the diameter widening springs 4722 is increased to maintain the relative positions of the chuck main body 471 and the gripping unit 472 in the Z1-axis direction using that frictional force.

Note that constituent elements included only in the descriptions of the variations described above may also be applied to other variations.

### [Reference Signs List]

- 1: NC lathe (machine tool)
- 4: First spindle (spindle)
- 48: Spindle cap
- 48a: Cap through-hole
- 471: Chuck main body
- 472: Gripping unit
- 472b: Rear-end side portion
- W1: Workpiece

## Claims

1. A machine tool that machines a workpiece gripped on a spindle,
wherein the spindle includes a collet chuck having a chuck main body disposed on a distal end portion of the spindle and a gripping unit that grips the workpiece, and a spindle cap that restricts movement of the chuck main body toward a distal end side by contacting a distal end surface of the chuck main body,
a cap through-hole is formed in the spindle cap at a center portion and penetrating in an axial direction of the spindle, and
in a state where the gripping unit is capable of widening and narrowing in a radial direction orthogonal to the axial direction and is narrowed in the radial direction, a rear-end side portion of the gripping unit, located further on a rear end side than the cap through-hole, is smaller than the cap through-hole in the radial direction.

2. The machine tool according to claim 1,
wherein an engaging portion is formed in an outer circumferential surface of the gripping unit, and
the chuck main body includes an engaged portion that restricts movement of the gripping unit in the axial direction by engaging with the engaging portion in a state where the gripping unit is widened in the radial direction.

3. The machine tool according to claim 1 or 2,
wherein the gripping unit includes an exposed portion exposed to a distal end of the spindle, and the exposed portion has an exposed recess recessed in the axial direction.

4. The machine tool according to claim 1 or 2,
wherein the gripping unit has a protruding portion protruding further toward the distal end side than the cap through-hole.

5. The machine tool according to claim 1 or 2,
wherein the gripping unit includes a plurality of dividers arranged in an annular form with gaps therebetween in a circumferential direction, and elastic members disposed between corresponding ones of the dividers and pressing the dividers outward in the radial direction.

6. A machine tool that machines a workpiece gripped on a spindle,
wherein the spindle includes a collet chuck having a chuck main body disposed on a distal end portion of the spindle and a gripping unit that grips the workpiece, and a spindle cap that restricts movement of the chuck main body toward a distal end side by contacting a distal end surface of the chuck main body,
a cap through-hole is formed in the spindle cap at a center portion and penetrating in an axial direction of the spindle, and
in a state where the gripping unit is capable of widening and narrowing in a radial direction orthogonal to the axial direction and is narrowed in the radial direction, a rear-end side portion of the gripping unit, located further on a rear end side than the cap through-hole, is capable of passing through the cap through-hole.
